Europäisches Patentamt

European Patent Office

Office européen des brevets

(11) Veröffentlichungsnummer: **0 176 685**
**A2**

# (12) EUROPÄISCHE PATENTANMELDUNG

(21) Anmeldenummer: **85109251.0**

(22) Anmeldetag: **24.07.85**

(51) Int. Cl.⁴: **G 11 B 20/10**
**G 11 B 20/14**

(30) Priorität: **22.09.84 DE 3434852**
**19.02.85 DE 3505704**

(43) Veröffentlichungstag der Anmeldung:
**09.04.86 Patentblatt 86/15**

(84) Benannte Vertragsstaaten:
**FR GB IT**

(71) Anmelder: **ANT Nachrichtentechnik GmbH**
**Gerberstrasse 33**
**D-7150 Backnang(DE)**

(72) Erfinder: **Kremers, Ernst, Dipl.-Ing.**
**Brennäckerstrasse 67**
**D-7157 Murrhardt(DE)**

(72) Erfinder: **Salvasohn, Manfred, Dipl.-Ing.**
**Settinerstrasse 1**
**D-7141 Kirchberg(DE)**

(74) Vertreter: **Schickle, Gerhard, Dipl.-Ing.**
**AEG-TELEFUNKEN Nachrichtentechnik GmbH K1 E7**
**Gerberstrasse 33**
**D-7150 Backnang(DE)**

(54) **Verfahren zum Ermitteln der laufenden digitalen Summe eines seriellen Datensignales.**

(57) Die Erfindung betrifft ein Verfahren zur Ermittlung und Überwachung der laufenden digitalen Summe (LDS), die gebildet wird aus den Bits eines codierten Datenstromes und zur Erkennung von Übertragungsfehlern dient, wobei die Datenbits der Binärziffer 1 mit dem Wert +1 und diejenigen mit der Binärziffer 0 mit dem Wert −1 bewertet werden und wobei die Überschreitung eines bestimmten vorgebbaren Betrages durch die LDS zu einer Begrenzung der LDS auf diesen vorgebbaren Betrag und zu einer Fehleranzeige führt, und ist dadurch gekennzeichnet, daß der serielle Datenstrom in n parallele Teildatenströme gleicher Geschwindigkeit aufgeteilt wird, daß jeweils ein Bit dieser n Teildatenströme in einem n-Bit-Speicher zwischengespeichert werden und daß das Muster dieser n Bits erkannt wird und aufgrund eines Vergleiches zwischen diesem Bitmuster und dem letzten LDS-Wert die neue LDS aufgrund eines vorher festgelegten Zustandsdiagramms ermittelt wird. Aufgrund der Aufteilung in n Teildatenströme ergibt sich die Reduzierung der Verarbeitungsgeschwindigkeit zur Ermittlung der LDS auf 1/n der Übertragungsgeschwindigkeit.

Fehlerausgang

FIG.2

EP 0 176 685 A2

- 1 -

ANT Nachrichtentechnik GmbH  E7/Ruf/fa
Gerberstraße 33  BK 84/65+132
7150 Backnang

### Verfahren zum Ermitteln der laufenden digitalen Summe eines seriellen Datensignales

Die Erfindung betrifft ein Verfahren zur Ermittlung der laufenden digitalen Summe eines binären Datensignals.
In digitalen Übertragungssystemen großer Übertragungskapazität kommt der Überwachung der Übertragungsstrecke während des laufenden Betriebs besondere Bedeutung zu. Mit Hilfe von redundanten Leitungscodes ist eine derartige Überwachung möglich. Darüberhinaus kann durch geeignete Wahl des Codes auch die Übertragungsqualität verbessert werden (beispielsweise durch Erhöhung der Taktinformation, durch Verbesserung der Signalstatistik und nicht zuletzt durch fehlerkorrigierende Codes).
Für die Übertragung über Lichtwellenleiter werden Blockcodes mit begrenzter laufender digitaler Summe eingesetzt (LDS). Fehler der Übertragung führen zum Überschreiten der Grenzen der LDS. Damit ist eine einfache Möglichkeit zur Fehlererkennung während des Betriebs gegeben. In der optischen Über-

tragungstechnik wird für die Leitungscodierung im allgemeinen 5B6B-Code mit der LDS-Grenze von $\pm 3$ verwendet.

In dem Aufsatz "Leitungscodierung und betriebliche Überwachung bei regenerativen Lichtleitkabel-Übertragungssystemen" von Drullmann und Kammerer in Frequenz 34, 1980, Nr. 2, Seite 45 ff. ist ein Verfahren der eingangs genannten Art beschrieben. Es sind auch Schaltungsanordnungen zur Realisierung dieses Verfahrens angegeben, zum einen einen digitalen LDS-Zähler und zum anderen eine analoge Schaltungsanordnung mittels Integrator zur Fehlererkennung. In dem Aufsatz werden die beiden Schaltungen diskutiert, wobei auf den hohen Aufwand an Digitalschaltkreisen sowie auf die verhältnismäßig hohe Leistungsaufnahme der Schaltung hingewiesen wird. Die analoge Fehlererkennungsschaltung weist einen vertretbaren Schaltungsaufwand bei vergleichsweise geringer Leistungsaufnahme auf. Bei beiden Schaltungen muß jedoch bei jedem empfangenen Bit entschieden werden, in welcher Weise der Zähler bzw. der Integratorzustand geändert werden muß. Bei sehr hohen Übertragungsgeschwindigkeiten steht für diese Entscheidung nur eine entsprechend kurze Zeit zur Verfügung, was zu erheblichen Schwierigkeiten führen kann, wenn diese Zeit, die der Taktzeit des Übertragungssystems entspricht, in die Grössenordnung der Durchlaufzeiten der für die Fehlererkennung verwendeten Schaltkreise kommt. Zusätzlich ist bei der analogen Fehlererkennungsschaltung ein Monoflop vorgesehen, das eine erste Fehlüberschreitung soweit verlängert, bis auch die zweite Überschreitung mit hoher Wahrscheinlichkeit stattgefunden hat. Eine solche Schaltungsfunktion kann nicht die Grundlage einer genauen Ermittlung der Üübertragungsfehlerrate sein.

Der vorliegenden Erfindung lag deshalb die Aufgabe zugrunde, ein Verfahren der eingangs genannten Art anzugeben, das eine exakte Ermittlung der laufenden digitalen Summe und eine etwaige Überschreitung dieser LDS bei Übertragungsfehlern auch bei sehr hohen Übertragungsgeschwindigkeiten gestattet. Das Verfahren soll aufwandsgünstig sein
und nur solche Bauelemente erforderlich machen, die wenig
Leistung aufnehmen.

Die Lösung erfolgt durch die im Anspruch 1 gekennzeichneten
Merkmale.

Die Ansprüche 2 und 3 geben vorteilhafte Ausgestaltungen
wieder. Die Ansprüche 4 bis 10 kennzeichnen optimale Schaltungsanordnungen zur Durchführung des erfindungsgemäßen Verfahrens.

In der deutschen Patentanmeldung P 34 08 646.3 (BK 83/131)
ist eine Schaltungsanordnung ebenfalls zum Ermitteln und
Überwachen der LDS gemäß der eingangs genannten Art vorgeschlagen worden. Diese Anordnung weist eine aufwandsgünstige Realisierung mit wenig Schaltungsaufwand und geringer
Verlustleistung auf, es gelten hier jedoch die gleichen
Schwierigkeiten, wenn die Taktzeit der Übertragungseinrichtung in die Größenordnung der Durchlaufzeit der in dieser Schaltung verwendeten Flip-Flops kommt.

Durch die Umwandlung des seriellen Datenstromes in mehrere
gleichlangsame Teildatenströme ergibt sich der Vorteil einer dem Teilungsfaktor entsprechenden Verkleinerung der
Verarbeitungsgeschwindigkeit. Infolgedessen kann die LDS-
Realisierung mit wesentlich langsameren Bausteinen erfolgen. Oder anders ausgedrückt, eine LDS-Realisierung ist
auch für höchste Übertragungsfrequenzen machbar und weist
eine sichere Betriebsfunktion auf. Das beanspruchte LDS-
Verfahren ist sehr aufwandsgünstig zu realisieren, wobei
lediglich ein Serien-/Parallelwandler, der natürlich eingangsseitig für die hohen Übertragungsgeschwindigkeiten
ausgebildet sein muß, ein Register mit einer Breite, welche
es ermöglicht, die erlaubten Zustände (beim 5B6B-Blockcode 7) zu speichern, sowie eine Logik erforderlich ist, wobei
diese Logik im wesentlichen Vergleichsfunktionen durchzuführen hat, nämlich einen Vergleich zwischen dem von dem
Serien-/Parallelwandler gelieferten Datenwort mit dem letzten aktuellen LDS-Wert, der im Register gespeichert ist,
sowie eine Funktion zum Einspeichern des neuen LDSW-Wertes
in das Register aufgrund des Ergebnisses der Vergleichs.

Es folgt nun eine Beschreibung der Erfindung anhand der Figuren.

Die Figur 1 zeigt ein Zustandsdiagramm für die LDS-Überwachung von 5B6B-codierten Signalen, die in zwei Teildatenströme aufgeteilt werden.

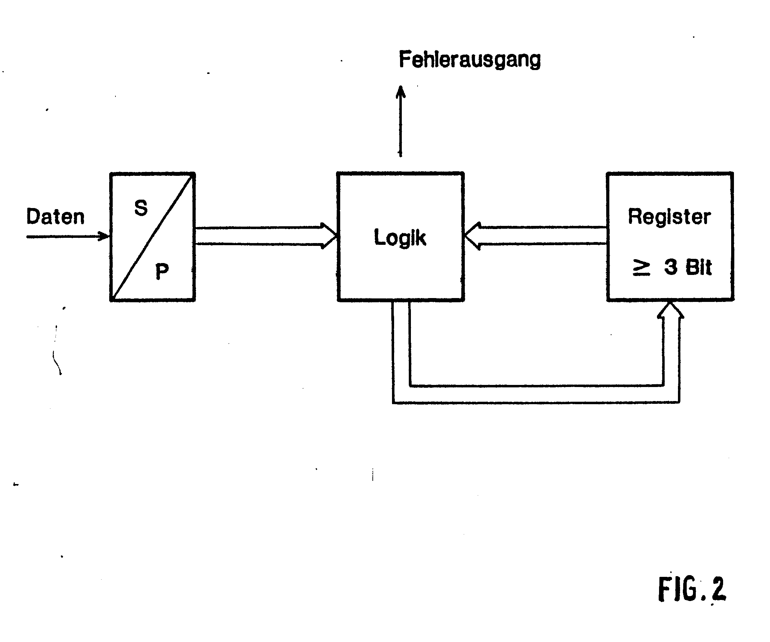

Die Figur 2 enthält ein Blockschaltbild zur Realisierung
einer LDS-Überwachung gemäß dem beanspruchten Verfahren.

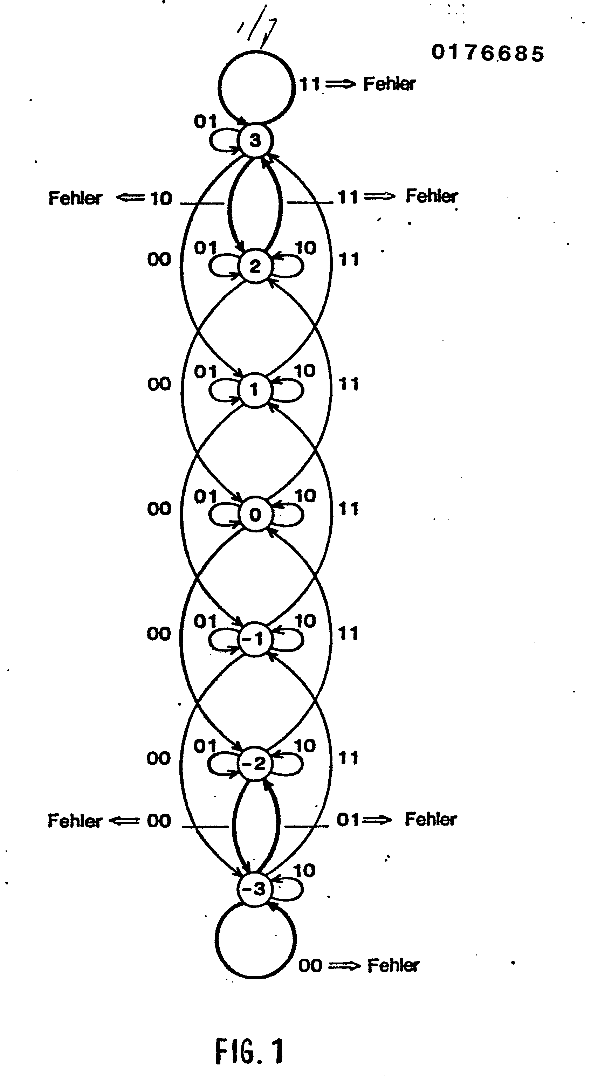

In Figur 1 sei angenommen, daß der Registerinhalt mit dem
aktuellen Wert der LDS übereinstimme und den Wert 0 aufweise. Bei Eintreffen von paarweise gleichen Bits wird der
Registerinhalt dann jeweils um zwei erhöht (bei 1.1) oder
erniedrigt (bei 00). Bei Erreichen der Grenze +3 führen
die Bitmuster 11 und 10 jeweils zur Überschreitung des zulässigen Bereichs von +3 und werden als Fehler angezeigt.
Bei dem Bitmuster 10 wird außerdem der Zustand des Registers um 1 verringert. Bei der unteren Grenze -3 gilt sinngemäß das gleiche für die Bitmuster 00 und 01, wobei bei 01
der Registerinhalt auf -2 ansteigt. Die beiden Bitmuster 10
und 01 führen also lediglich, wenn die beiden Grenzwerte
von +3 bzw. -3 erreicht sind, zu einer Änderung des Registerinhaltes, alle anderen Registerzustände werden von diesen beiden Bitmustern nicht beeinflußt.

Sofern die Übertragungsgeschwindigkeit so hohe Werte aufweist, daß eine Halbierung des Datenstromes und damit eine
Halbierung der Verarbeitungsgeschwindigkeit immer noch nicht ausreichend ist, kann eine weitere Parallelisierung
des Empfangssignals, d.h. eine Erhöhung von n über 2 hinaus
selbstverständlich durchgeführt werden, wodurch eine entsprechend weitere Reduzierung der Verarbeitungsgeschwindigkeit erreicht wird. Allerdings ist dann der Aufwand
für die Serien-/Parallelwandlung und für die Logik (aufgrund
des breiteren Wortes) geringfügig höher.

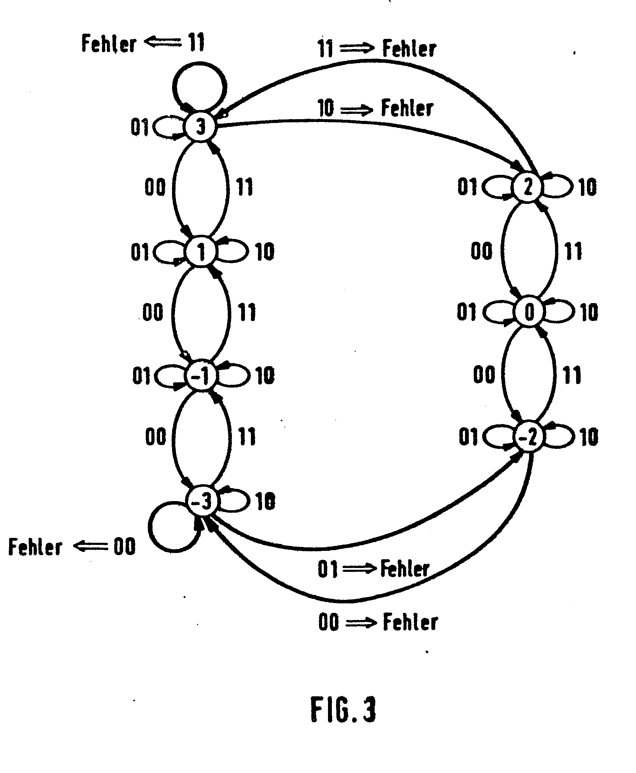

Die Figur 3 zeigt ein Zustandsdiagramm für die LDS-überwachung von 5B6B-codierten Signalen, die in 2 Teildatenströme aufgeteilt werden.

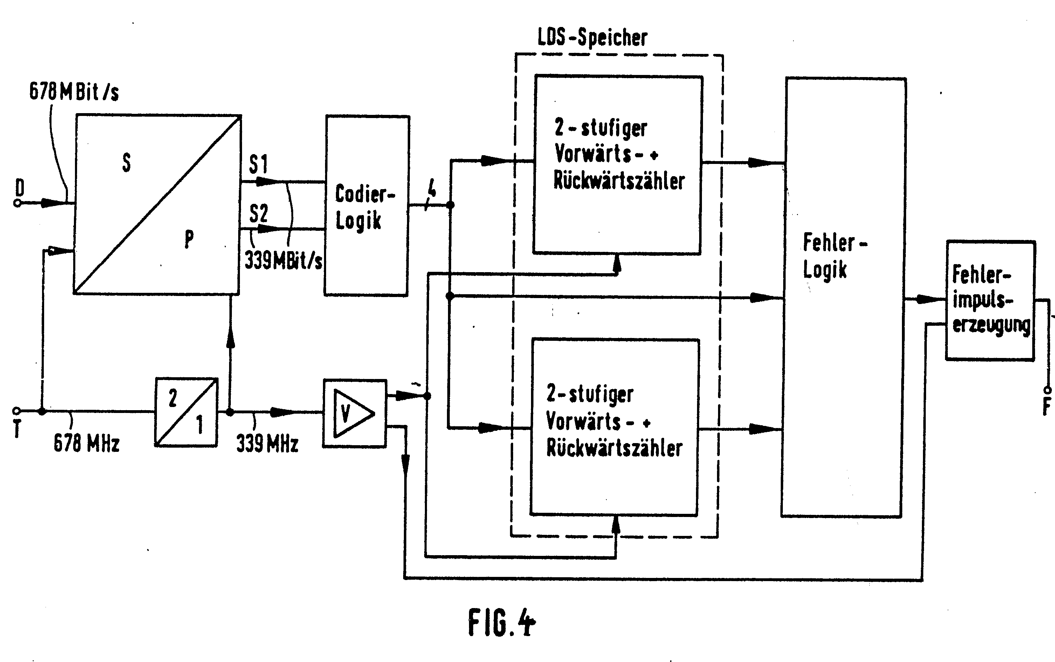

Die Figur 4 stellt ein detailliertes Blockschaltbild für eine Ausführungsform der erfindungsgemäßen Schaltungsanordnung
dar.

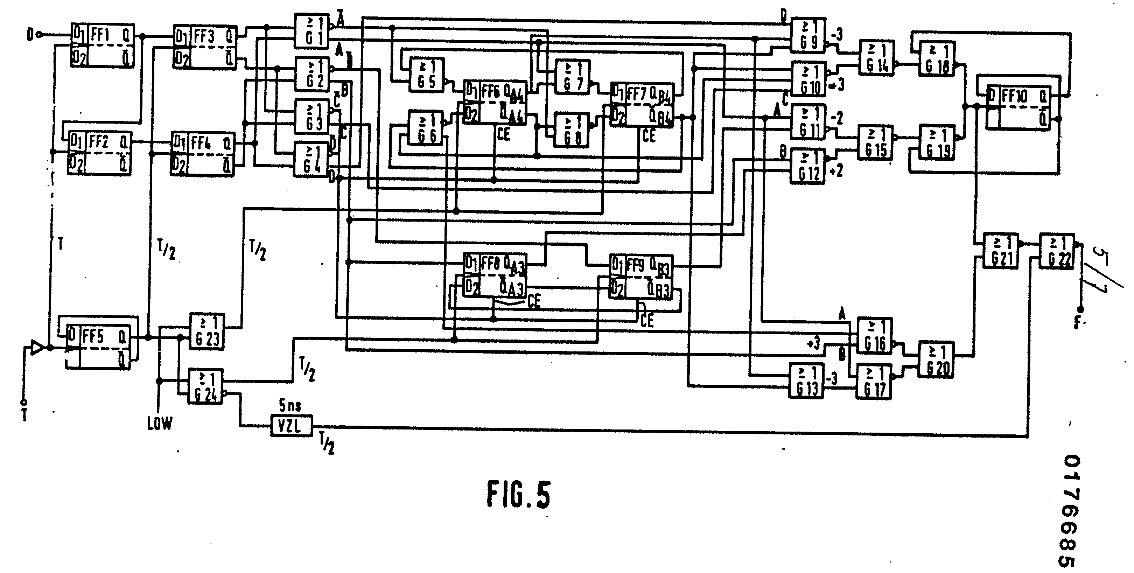

In Figur 5 schließlich ist ein detailliertes Schaltbild für
die Anordnung nach Figur 4 mit einer Detailauflösung von
logischen Verknüpfungs- und Speichereinheiten wiedergegeben.

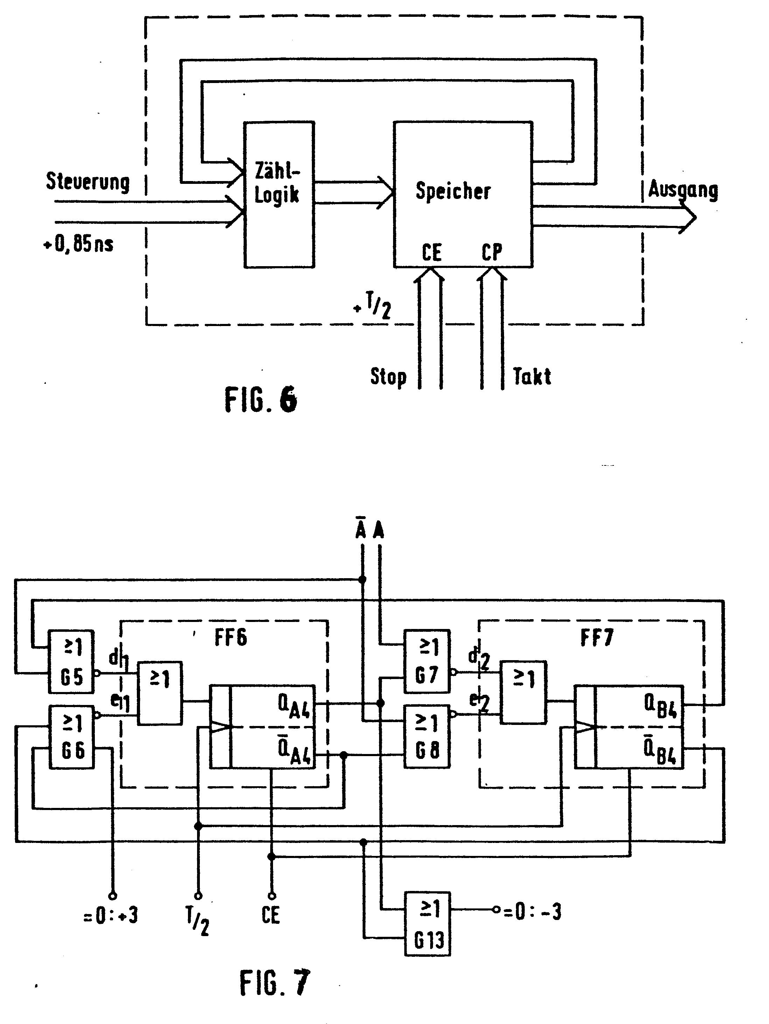

Die Figur 6 zeigt ein Blockschaltbild für einen 2-stufigen
Vor- Rückwärtszähler mit 4 Zyklen und Bild 7 einen detaillierten Schaltplan auf der Grundlage von logischen Verknüpfungseinheiten für den selben Zähler.

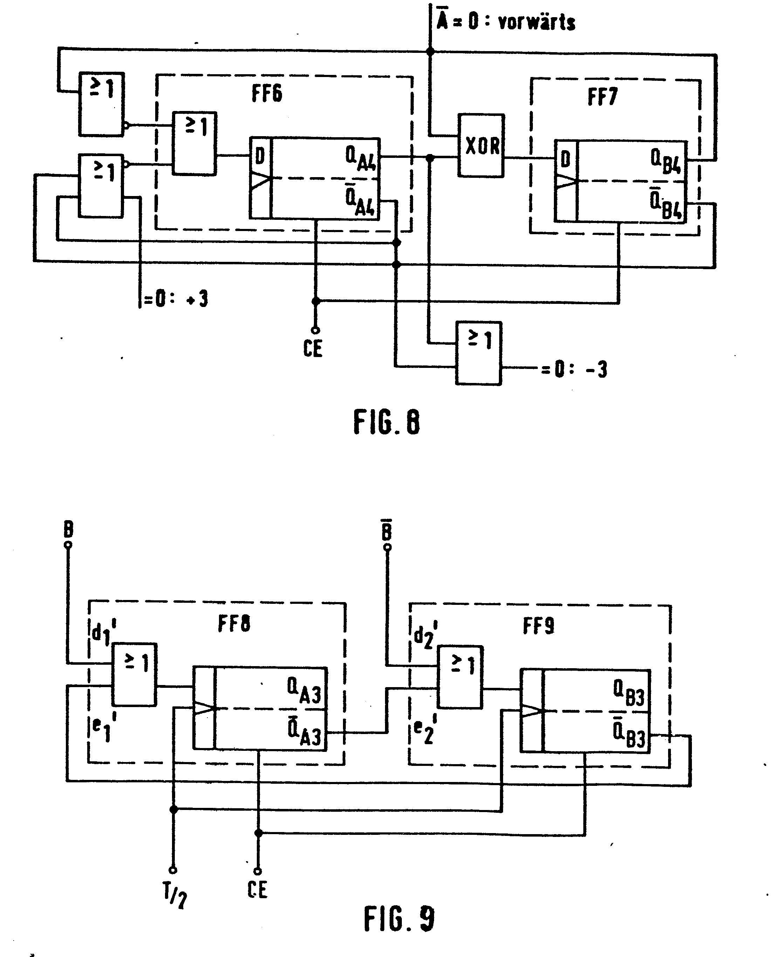

Die Figur 8 gibt eine Variante für einen Zähler gemäß Figur
6 oder 7 wieder, während Figur 9 den logischen Verknüpfungsschaltplan für einen schnellen 2-stufigen Vor- Rückwärtszähler mit 3 Zyklen wiedergibt.

Das Zustandsdiagramm der Figur 3 unterscheidet sich nicht
von demjenigen der Figur 1, es wurde lediglich anders gezeichnet, so daß 2 Zyklen, der eine mit 3 Zuständen und
der andere mit 4 Zuständen, erkennbar werden. Es sei angenommen, daß der Registerinhalt mit dem aktuellen Wert der
LDS übereinstimme und den Wert 0 aufweise. Bei Eintreffen
von paarweise gleichen Bits wird der Registerinhalt dann jeweils um 2 erhöht (bei 11) oder erniedrigt (bei 00). Bei Erreichen der Grenze +3, wodurch ein Wechsel vom 3-er zum 4-er Zyklus stattfindet, führen die Bitmuster 11 und 10, welch letzteres Bitmuster wieder zurückführt in den 3-er Zyklus, jeweils zur Überschreitung des zulässigen Bereichs von +3 und werden als Fehler angezeigt. Bei der unteren Grenze -3 gilt sinngemäß das gleiche für die Bitmuster 00 und 01, wobei bei 01 der Registerinhalt auf -2 ansteigt. Die beiden Bitmuster 10 und 01 führen also lediglich, wenn die beiden Grenzwerte von +3 bzw. -3 erreicht sind, zu einer Änderung des Registerinhaltes, alle anderen Registerzustände werden von diesen beiden Bitmustern nicht beeinflußt.

In Figur 4 ist ein Serien-Parallel-Wandler S/P erkennbar, welcher aus dem seriell mit 678 MBit/s einlaufenden Datensignal D 2 Teildatenströme von 339 MBit/s S1 und S2 unter Zuhilfenahme des eingangsseitigen Taktes von 678 MHz und des ausgangsseitig verwendeten, durch eine Teilerstufe 2:1 geteilten Taktes T/2 von 339 MHz erzeugt. Die beiden Teildatenströme S1 und S2 werden einer Codierlogik zugeführt, welche die 4 möglichen Zustände jeweils eines Bitpaares S1 S2 erkennt und jeweils einem Ausgang zuordnet. Durch die Decodierlogik werden der LDS-Speicher und eine Fehlerlogik angesteuert. Der LDS-Speicher besteht aus 2 2-stufigen Vor- Rückwärtszählern, wobei der eine den 3 Zustände und der andere den 4 Zustände umfassenden Zyklus gemäß Zustandsdiagramm nach Fig. 3 durchläuft. Die beiden Zähler laufen parallel mit der halben Taktfrequenz T/2 auf- bzw. abwärts, wobei sie bei Erreichen der Grenzzustände +2, -2, +3, -3 jeweils selbständig anhalten. Durch die Fehlerlogik wird der Zustand der Zähler mit dem Ausgang der Decodierlogik verglichen. Eine der Fehlerlogik nachgeschaltete Fehlerimpulserzeugung erzeugt für jeden Fehler ein mit dem Taktsignal T/2 verknüpftes Fehlerimpulssignal.

Der detaillierte Stromlaufplan gemäß Figur 5 für die LDS-Schaltung nach Figur 4 sieht logische Verknüpfungs- und Speicherelemente vor, die vorteilhafterweise in ECL-Technik ausgeführt sind, welche eine maximale Taktfrequenz von 880 MHz zulassen. Die Flip-Flops sind durchweg Master-Slave D-Flip-Flops, während die Verknüpfungsglieder OR/NOR-Glieder sind.

Der Serien-Parallel-Wandler umfaßt ein 2-stufiges Schieberegister, das aus den beiden hintereinandergeschalteten Flip-Flop FF1 und FF2 besteht, und einen 2-stufigen Speicher, der ebenfalls aus 2 Flip-Flops FF3 und FF4 besteht und mit seinen Eingängen jeweils mit einem Ausgang der vorgeschalteten Schieberegisterstufen verbunden ist. Das Schieberegister wird mit der hohen Taktrate T getaktet und erzeugt somit aus dem am Eingang seiner ersten Stufe anstehenden seriellen Datenstrom D an seinen beiden Ausgängen 2 Teildatenströme der halben Bitfrequenz. Diese Teildatenströme werden mit der halben Taktfrequenz T/2 von dem 2-stufigen Speicher übernommen. Die halbierte Taktfrequenz wird in einem 5., rückgekoppelten Flip-Flop FF5 durch Teilung der hohen Taktrate erzeugt und an die übrigen Baugruppen der LDS-Überwachung verteilt.

Die Decodierlogik besteht aus den 4 OR/NOR-Gliedern G1, G2, G3 und G4 mit den Ausgängen A, B, C, D und den invertierten Ausgängen $\overline{A}$, $\overline{B}$, $\overline{C}$ und $\overline{D}$. Der Decodierlogik werden die beiden Teildatenströme S1 und S2 bzw. in invertierter Form $\overline{S1}$, $\overline{S2}$ zugeführt und nach folgender Wahrheitstabelle 1

| $S_1$ | $S_2$ | A | $\overline{A}$ | B | $\overline{B}$ | C | $\overline{C}$ | D | $\overline{D}$ |
|---|---|---|---|---|---|---|---|---|---|
| 0 | 0 | 0 | 1 | 1 | 0 | 1 | 0 | 1 | 0 |
| 1 | 1 | 1 | 0 | 0 | 1 | 1 | 0 | 1 | 0 |
| 0 | 1 | 1 | 0 | 1 | 0 | 1 | 0 | 0 | 1 |
| 1 | 0 | 1 | 0 | 1 | 0 | 0 | 1 | 1 | 0 |

verarbeitet. Diese Wahrheitstabelle entspricht den folgenden logischen Verknüpfungsvorschriften

$$A = S1 + S2$$
$$B = \overline{S1} + \overline{S2}$$
$$C = \overline{S1} + S2$$
$$D = S1 + \overline{S2}.$$

Die Ausgangssignale der Decodierlogik speisen die beiden
2-stufigen Vor- Rückwärtszähler. Das Prinzipschaltbild eines solchen Zählers ist in Figur 6 dargestellt. Im Prinzip
besteht ein solcher Zähler aus einem Speicher, der über eine Zähllogik von außen und von seinem Ausgang als Rückkopplung angesteuert wird. Er wird mit dem Takt T/2 getaktet
und verfügt außerdem über einen Stop-Eingang CE (Clock
Enable).
Der Figur 5 und noch detaillierter der Figur 7 ist der logische Schaltplan eines 2-stufigen Vor- Rückwärtszählers
für den 4-er Zyklus mit Grenzzustandserkennung entnehmbar.
Die beiden Stufen enthalten jeweils ein Flip-Flop als Speicher FF6 und FF7, die über je 2 NOR-Glieder G5, G6, G7 und
G8 angesteuert werden. Der Zählereingang wird mit den De-
codierlogik-Ausgangssignalen A bzw. $\overline{A}$ beaufschlagt. Der

Zähler arbeitet nach der folgenden Wahrheitstabelle 2

| $\overline{A}$ | A | $Q_{A4}$ | $Q_{B4}$ | $d_1$ | $e_1$ | $d_2$ | $e_2$ | Zustand | Bemerkung |
|---|---|---|---|---|---|---|---|---|---|
| 0 | 1 | 0 | 0 | 1 | 0 | 0 | 0 | -1 | Start beliebig |
| 0 | 1 | 1 | 0 | 1 | 0 | 0 | 1 | +1 | |
| 0 | 1 | 1 | 1 | 0 | 1 | 0 | 1 | +3 | |
| 0 | 1 | 1 | 1 | 0 | 1 | 0 | 1 | +3 | Zähler hält an |
| 1 | 0 | 1 | 0 | 0 | 0 | 0 | 0 | +1 | |
| 1 | 0 | 0 | 0 | 0 | 0 | 1 | 0 | -1 | |
| 1 | 0 | 0 | 1 | 0 | 0 | 1 | 0 | -3 | |
| 1 | 0 | 0 | 1 | 0 | 0 | 1 | 0 | -3 | Zähler hält an |
| 0 | 1 | 0 | 0 | 1 | 0 | 0 | 0 | -1, | |

wobei $Q_{A4}$ und $Q_{B4}$ die Zählerausgänge und $d_1$, $d_2$, $e_1$ und
$e_2$ die Ausgänge der beiden Zählerlogik-Gatterpaare sind.
Der Zähler wird ein Vorwärtszähler, wenn A = 1 ist, und ein
Rückwärtszähler für A = 0. In den Zuständen +3 und -3 hält
der Zähler selbständig an, und in den Zuständen +1 und -1
kann er über die Clock-Enable-Eingänge zum Anhalten gebracht
werden. Die Besonderheit dieses Zählers liegt darin, daß in
der Rückkopplung nur eine Gatterebene liegt, wodurch nur geringe Laufzeiten auftreten, so daß er bis zu einer Taktfrequenz von über 500 MHz betrieben werden kann. Die maximale
Zählfrequenz ist abhängig von folgenden Zeiten

    Propagation Delay FF     : 1,0  ns
    Set-up Time FF           : 0,1  ns
    Propagation Delay Gatter: 0,75 ns
    Laufzeit durch Leitungen: 0,1  ns

Das ergibt eine maximale Zählfrequenz von etwa 513 MHz.

Bei den Setzeingängen ist zu beachten, daß für den Clock-Enable-Eingang das Signal mindestens eine halbe Taktdauer lang sein muß und eine halbe Taktdauer vor der Taktflanke anliegen muß. Die Steuersignale zur Steuerung für Vor- und Rückwärtszählen müssen mindestens um die Durchlaufzeiten des Gatters und um die Set-up Time, also etwa um 0,85 ns, vor der Taktflanke anlegen.

Eine Variante zur Realisierung eines schnellen Vor- Rückwärtszählers für den 4er-Zyklus ist in Figur 8 dargestellt. Dieser Zähler erfüllt die gleichen Funktionen wie der Zähler nach Figur 7, wobei jedoch ein Gatter eingespart wird, nämlich die interne OR-Verknüpfung in der 2. Flip-Flop-Stufe B, und wobei nur eine Steuerleitung, nämlich $\overline{A}$, benötigt wird.

Der 2-stufige Vor- Rückwärtszähler für den 3er-Zyklus ist ebenfalls aus Figur 5 und etwas detaillierter aus Figur 9 entnehmbar, er besteht aus den beiden Flip-Flop-Stufen FF8 und FF9 und realisiert die rechte Hälfte des Zustandsdiagramms gemäß Figur 3. Der Zähler besitzt 2 Steuereingänge B und $\overline{B}$, die wie die beiden invertierten Ausgänge der Zählerstufen über die internen ODER-Gatter auf ihre beiden direkten Setzeingänge wirken. Der Zähler arbeitet nach der folgenden Wahrheitstabelle 3

| $\overline{B}$ | B | $Q_{A3}$ | $Q_{B3}$ | $d_1'$ | $e_1'$ | $d_2'$ | $e_2'$ | Zustand | |
|---|---|---|---|---|---|---|---|---|---|
| 1 | 0 | 0 | 0 | 0 | 1 | 1 | 1 | Nebenzyklus | |
| 1 | 0 | 1 | 1 | 0 | 0 | 1 | 0 | 0 | |
| 1 | 0 | 0 | 1 | 0 | 0 | 1 | 1 | +2 | |
| 1 | 0 | 0 | 1 | 0 | 0 | 1 | 1 | +2, | Zähler hält an |
| 0 | 1 | 1 | 1 | 1 | 0 | 0 | 0 | 0 | |
| 0 | 1 | 1 | 0 | 1 | 1 | 0 | 0 | -2 | |
| 0 | 1 | 1 | 0 | 1 | 1 | 0 | 0 | -2, | Zähler hält an |
| 1 | 0 | 1 | 1 | 0 | 0 | 1 | 0 | 0, | |

0176685

BK 84/65+132

wobei mit $Q_{A3}$ und $Q_{B3}$ die Normalausgänge der beiden Zählerstufen und mit $d_1'$, $e_1'$, $d_2'$ und $e_2'$ die Eingänge der internen
OR-Gatter bezeichnet sind. Beim Vorwärtszählen ist B = 0,
beim Rückwärtszählen ist B = 1 gesetzt. In den Zuständen
+2 und -2 hält der Zähler selbständig an, im Zustand 0 kann
er über die Clock Enable-Eingänge CE angehalten werden. Lediglich beim Start ist ein Nebenzyklus möglich, welcher jedoch in den Hauptzyklus übergeht. Zusätzliche Maßnahmen zur
Unterdrückung dieses Nebenzyklus sind daher nicht erforderlich. Die Rückkopplungsschleife enthält nur 2 Leitungen, wodurch der Zähler bis zu Taktfrequenzen von über 800 MHz betriebsfähig ist. Die maximale Zählfrequenz ist abhängig von
den folgenden Zeiten

Propagation Delay FF       : 1,0 ns
Set-up Time FF             : 0,1 ns
Laufzeit durch Leitungen : 0,1 ns.

Daraus ergibt sich eine maximale Zählfrequenz von etwa 830
MHz. Zu beachten ist hier, daß die Steuersignale zur Steuerung für Vor- Rückwärtszählen lediglich um die Set-up Time
versetzt vor der Taktflanke, also um 0,1 ns früher, anliegen
müssen.

Die Fehlerlogik hat die Aufgabe, einen Fehlerimpuls zu erzeugen, wenn die LDS die Grenzen von $\pm 3$ überschreitet. Wie
aus dem Zustandsdiagramm der Figur 3 zu erkennen ist, wirkt
sich ein Wechsel zwischen den Zählern wie eine Überschreitung der Grenzen der LDS aus. Darüber hinaus führen die
Bit-Kombinationen 00 bei der Zählerstellung -3 und 11 bei
der Zählerstellung +3 ebenfalls zur Überschreitung der LDS.
Die Fehlerlogik enthält logisches Verknüpfungsgatter G9 bis
G12, welche die paarweise empfangenen Bits, welche die Ausgänge der Decodierlogik abgeben, mit den Zuständen der beiden Zähler vergleichen. Beim Übergang zwischen den Zählern
wird die positive Taktflanke für ein weiteres Flip-Flop
FF10 erzeugt. Über eine Rückkopplung vom Ausgang Q bzw. vom
invertierten Ausgang $\overline{Q}$ dieses Flip-Flops über weitere Gatter G18 und G19 wird die negative Taktflanke für dieses
Flip-Flop nach seiner Durchlaufzeit erzeugt. Wenn zwischen
den Zählern umgeschaltet wird, liegt somit am Takteingang
des Flip-Flops FF10 ein Impuls, dessen Dauer von den Laufzeiten in der Rückkopplung bestimmt ist.
Mit Hilfe des Gatters G6 und weiterer Gatter G13, G16, G17
und G20 wird beim Zustand $\pm 3$ des Zählers erkannt, ob die
Bit-Kombinationen 00 bzw. 11 am Eingang anliegen.

Die Fehlerimpulserzeugung enthält ein weiteres Gatter G21,
mit dem eine ODER-Verknüpfung des weiter oben beschriebenen
Fehlersignals mit dem Fehlerimpuls des Flip-Flops FF10
durchgeführt wird. Das Ausgangssignal des Gatters G21 wird
in einem weiteren Gatter G22 mit dem Betriebstakt T/2 verknüpft, so daß am Ausgang dieses Gatters für jeden Fehler
ein Impuls definierter Dauer ansteht.

Patentansprüche


1. Verfahren zum Ermitteln und Überwachen der laufenden
digitalen Summe (LDS) aus den Bits eines codierten
seriellen Datenstromes zur Erkennung von Übertragungsfehlern, wobei ein Datenbit mit der Binärziffer 1 mit
dem Wert +1 und ein Datenbit mit der Binärziffer 0 mit
dem Wert -1 bewertet werden und wobei die Überschreitung eines bestimmten vorgebbaren Betrages durch die
LDS zu einer Begrenzung der LDS auf diesen vorgebbaren
Betrag und zu einer Fehleranzeige führt, dadurch gekennzeichnet, daß der serielle Datenstrom in n parallele Teildatenströme gleicher Geschwindigkeit aufgeteilt
wird,
daß ein n-Bitspeicher vorgesehen ist, in den jeweils
ein Bit der n Teildatenströme zwischengespeichert
wird,
daß jeweils nach erfolgter Zwischenspeicherung dieser
n.1 Bit der Binärwert dieses n-Bit-Worts decodiert
wird,
daß ein Vergleich zwischen diesem Binärwert und der
zuletzt ermittelten LDS erfolgt und
daß die neue LDS aufgrund eines vorher festgelegten Zustandsdiagramms aus der alten LDS in Abhängigkeit von
dem Binärwert ermittelt wird.


2. Verfahren nach Anspruch 1, wobei der serielle Datenstrom 5B6B-Block codiert und die Anzahl verschiedener
LDS-Werte auf sieben beschränkt ist, dadurch gekennzeichnet, daß n = 2 gewählt wird und daß folgendes Zustandsdiagramm LDS neu = LDS alt (laufendes Datenbitpaar) zur Ermittlung der neuen LDS verwendet wird:

| LDS alt | lfd. Datenbitpaar | | | |
|---|---|---|---|---|
| | 00 | 01 | 10 | 11 |
| -3 | -3F | -2F | -3 | -1 |
| -2 | -3F | -2 | -2 | 0 |
| -1 | -3 | -1 | -1 | 1 |
| 0 | -2 | 0 | 0 | 2 |
| 1 | -1 | 1 | 1 | 3 |
| 2 | 0 | 2 | 2 | 3F |
| 3 | 1 | 3 | 2F | 3F, |

wobei die mit F gekennzeichneten neuen LDS-Werte aussagen, daß ein Übertragungsfehler vorliegt.

3. Verfahren nach Anspruch 1 oder 2, dadurch gekennzeichnet, daß zur Datenstromaufteilung ein Serien-/Parallelwandler verwendet wird.

4. Schaltungsanordnung zur Durchführung des Verfahrens nach einem der vorhergehenden Ansprüche, dadurch gekennzeichnet, daß zur Speicherung der LDS ein Register vorgesehen ist,
daß zur Aufteilung des seriellen Datenstromes in n parallele Teildatenströme ein Serien-/Parallelwandler vorgesehen ist,
und daß eine Logik mit Fehlerausgang vorgesehen ist, durch welche das am Ausgang des Serien-/Parallelwandlers anstehende Wort mit dem Registerinhalt verglichen wird und durch welche eine aufgrund des Vergleichsergebnisses neu ermittelte LDS in das Register eingespeichert wird (Figur 2).

5. Schaltungsanordnung zur Durchführung des Verfahrens nach einem der Ansprüche 1 bis 3, dadurch gekennzeichnet, daß zur Aufteilung des seriellen Datenstroms in n parallele Teildatenströme ein Serien-/ Parallelwandler vorgesehen ist,

daß eine Decodierlogik zur Zwischenspeicherung und Decodierung der Teildatenströme und ein durch diese gesteuerter Vorwärts- Rückwärts-Zähler vorgesehen sind, in den die neue LDS eingespeichert wird,

daß eine mit dem Zählerausgang verbundene Fehlerimpulserzeugung vorgesehen ist und

daß eine Taktteilung vorgesehen ist, durch welche die Taktfrequenz 1/T des eingangsseitigen seriellen Datenstromes auf 1/nT heruntergeteilt und dann dem Zähler und der Fehlerimpulserzeugung zugeleitet wird (Fig. 4).

6. Schaltungsanordnung zur Durchführung des Verfahrens nach Anpruch 2, und nach Anspruch 5, dadurch gekennzeichnet, daß 2 2-stufige, eingangsseitig parallelgeschaltete Vor- Rückwärts-Zähler verwendet werden, wobei der eine die 4 Zustände 3, 1, -1, -3 und der andere die 3 Zustände 2, 0, -2 erfaßt (Fig. 4).

7. Schaltungsanordnung zur Durchführung des Verfahrens nach Anspruch 2, oder nach Anspruch 6, dadurch gekennzeichnet, daß der Serien-/Parallelwandler aus einem 2-stufigen Schieberegister (FF1, FF2) und einem 2-stufigen Speicher (FF3, FF4), dessen beiden Eingänge jeweils mit einem Ausgang der beiden Schieberegister-Flip-Flops verbunden ist, besteht (Fig. 5).

8. Schaltungsanordnung nach Anspruch 7, dadurch gekennzeichnet, daß die Decodierlogik aus 4 (N)OR-Gattern (G1 bis G4) besteht, deren Eingänge jeweils mit einem der beiden Ausgänge des 2-stufigen Speichers (FF3, FF4) verbunden sind (Fig. 3) und die nach folgender

Wahrheitstabelle 1

| $S_1$ | $S_2$ | A | $\overline{A}$ | B | $\overline{B}$ | C | $\overline{C}$ | D | $\overline{D}$ |
|---|---|---|---|---|---|---|---|---|---|
| 0 | 0 | 0 | 1 | 1 | 0 | 1 | 0 | 1 | 0 |
| 1 | 1 | 1 | 0 | 0 | 1 | 1 | 0 | 1 | 0 |
| 0 | 1 | 1 | 0 | 1 | 0 | 1 | 0 | 0 | 1 |
| 1 | 0 | 1 | 0 | 1 | 0 | 0 | 1 | 1 | 0 |

decodiert, wobei S1 und S2 die beiden seriellen Teildatenströme und A, B, C, und D die Normalsausgänge und $\overline{A}$, $\overline{B}$, $\overline{C}$ und $\overline{D}$ die negierten Ausgänge der Decodierlogik sind.

9. Schaltungsanordnung nach einem der Ansprüche 6 bis 8, dadurch gekennzeichnet, daß der eine 2-stufige Vor-Rückwärts-Zähler aus 2 in Kaskade geschalteten Flip-Flop-Speichern (FF6, FF7) und 4 NOR-Gattern (G5 bis G8) besteht, wobei die Ansteuerung der 2. Flip-Flop-Speicherstufe und die Ansteuerung der 1. Stufe bzw. die Rückkopplung vom Ausgang der 2. auf den Eingang der 1. Stufe jeweils über 2 NOR-Gatter nach der folgenden Warheitstabelle 2

| $\overline{A}$ | A | $Q_{A4}$ | $Q_{B4}$ | $d_1$ | $e_1$ | $d_2$ | $e_2$ | Zustand | |
|---|---|---|---|---|---|---|---|---|---|
| 0 | 1 | 0 | 0 | 1 | 0 | 0 | 0 | -1 | Start beliebig |
| 0 | 1 | 1 | 0 | 1 | 0 | 0 | 1 | +1 | |
| 0 | 1 | 1 | 1 | 0 | 1 | 0 | 1 | +3 | |
| 0 | 1 | 1 | 1 | 0 | 1 | 0 | 1 | +3 | Zähler hält an |
| 1 | 0 | 1 | 0 | 0 | 0 | 0 | 0 | +1 | |
| 1 | 0 | 0 | 0 | 0 | 0 | 1 | 0 | -1 | |
| 1 | 0 | 0 | 1 | 0 | 0 | 1 | 0 | -3 | |
| 1 | 0 | 0 | 1 | 0 | 0 | 1 | 0 | -3 | Zähler hält an |
| 0 | 1 | 0 | 0 | 1 | 0 | 0 | 0 | -1 | |

erfolgt (Fig. 7), wobei A und $\overline{A}$ die Eingangssignale, $Q_{A4}$ und $Q_{B4}$ die Ausgangssignale und $d_1$, $e_1$ die Ausgangssignale zur Ansteuerung des 1. Flip-Flop-Speichers und $d_2$, $e_2$ die Ausgangssignale der beiden NOR-Gatter (G7 und G8) zur Ansteuerung der 2. Flip-Flop-Speicher-Stufe sind.

10. Schaltungsanordnung nach einem der Ansprüche 6 bis 8, dadurch gekennzeichnet, daß der andere 2-stufige Vor-Rückwärts-Zähler aus 2 Flip-Flops (FF8, FF9) besteht, die nach der folgenden Wahrheitstabelle 3

| $\overline{B}$ | B | $Q_{A3}$ | $Q_{B3}$ | $d'_1$ | $e'_1$ | $d'_2$ | $e'_2$ | Zustand |
|---|---|---|---|---|---|---|---|---|
| 1 | 0 | 0 | 0 | 0 | 1 | 1 | 1 | Nebenzyklus |
| 1 | 0 | 1 | 1 | 0 | 0 | 1 | 0 | 0 |
| 1 | 0 | 0 | 1 | 0 | 0 | 1 | 1 | +2 |
| 1 | 0 | 0 | 1 | 0 | 0 | 1 | 1 | +2    Zähler hält an |
| 0 | 1 | 1 | 1 | 1 | 0 | 0 | 0 | 0 |
| 0 | 1 | 1 | 0 | 1 | 1 | 0 | 0 | -2 |
| 0 | 1 | 1 | 0 | 1 | 1 | 0 | 0 | -2    Zähler hält an |
| 1 | 0 | 1 | 1 | 0 | 0 | 1 | 0 | 0 |

arbeiten (Fig. 9), wobei B und $\overline{B}$ die Eingangssignale für die beiden Zählerstufen (gleichzeitig Ausgangssignale des 3. Gatters (G3) der Decodierlogik) und $Q_{A3}$ und $Q_{B3}$ die Ausgangssignale der beiden Zählerstufen sind.

- - - - - - -

FIG. 1

Fehlerausgang

Daten

S / P

Logik

Register ≥ 3 Bit

FIG.2

0176685

2/7

RK 84 / 65

FIG.3

FIG.4

FIG.5

FIG. 6

FIG. 7

0176685

7/7

$\bar{A} = 0$ : vorwärts

FIG. 8

FIG. 9